# EUROPEAN PATENT SPECIFICATION

(11) **EP 3 984 734 B1**
(45) Date of publication and mention of the grant of the patent: **17.05.2023**
(21) Application number: 21196196.6
(22) Date of filing: 13.09.2021
(51) Int. Cl.: B32B 1/02, B32B 5/26, B32B 27/12, F17C 1/04, F17C 1/06, B32B 25/10

(54) **STORAGE TANK FOR GASEOUS HYDROGEN**
LAGERBEHÄLTER FÜR GASFÖRMIGEN WASSERSTOFF
RÉSERVOIR DE STOCKAGE D'HYDROGÈNE GAZEUX

(30) Priority: 14.10.2020 GB 202016264
(43) Date of publication of application: 20.04.2022
(73) Proprietor: Rolls-Royce plc, London N1 9FX (GB)
(72) Inventor: Backhouse, Robert, Derby, DE24 8BJ (GB); James, Darren, Derby, DE24 8BJ (GB)
(74) Representative: Rolls-Royce plc

(56) References cited:
- US-A1- 2017 104 227
- US-A1- 2018 066 797
- US-A1- 2018 163 925

## Description

### TECHNICAL FIELD

The invention relates to storage tanks for storing gaseous hydrogen, particularly at high pressure for example at 300 bar or more.

### BACKGROUND

A laminate composite structure is a structure comprising a plurality of laminar layers at least one of which is of a composite material. A laminate composite gas storage tank is a gas storage tank in which the boundary wall of the tank has a laminate composite structure. Laminate composite gas storage tanks are currently used in automotive applications for storing gaseous hydrogen at high pressure. Motive power in these applications is typically provided by PEM fuel cells. Such tanks are also used in spaceflight applications and certain military drone applications for storage of gaseous hydrogen at high pressure.

Laminate composite gas storage tanks for automotive applications are too heavy for civil aviation applications, in which significantly greater volumes of hydrogen are needed than in automotive applications. An automotive laminate composite gas storage tank typically comprises a polymer liner which contributes significantly to the tank's weight and therefore adversely affects its gravimetric efficiency. The weight and gravimetric efficiency of such a tank are also compromised by the requirement that the tank be resistant to micro-cracking within its boundary wall as a result of pressure cycling. Micro-cracking leads to leakage of stored gaseous hydrogen by permeation through the boundary wall of the tank. Providing resistance to micro-cracking tends to result in laminate composite structures of substantial thickness and weight. An automotive laminate composite gas storage tank typically has a gravimetric efficiency of around 6%. A laminate composite gas storage tank for a civil aircraft is required to have a gravimetric efficiency of around 10% in the case of short-range flight missions and more than 10% for longer range applications.

In spacecraft applications, the rate of consumption of stored gaseous hydrogen is very high and greatly exceeds the rate at which gaseous hydrogen leaks from a storage tank by permeation. Lightweight laminate composite hydrogen storage tanks can therefore be produced for such applications with little or no concerns over hydrogen leakage. Furthermore, such tanks are typically used only once, or for a small number of cycles, and therefore do not need a significant degree of resistance to micro-cracking resulting from repeated pressure cycling. Although rapid consumption of gaseous hydrogen and a small number of pressure cycles allows for a lightweight tank within a spacecraft application, this design approach does not translate to civil aviation applications in which gaseous hydrogen is consumed at a much lower rate and in which a storage tank for gaseous hydrogen will experience many pressure and temperature cycles over its lifetime.

A gaseous hydrogen storage tank for a civil aviation application is required to have a high gravimetric efficiency, low permeability to hydrogen and substantial resistance to micro-cracking caused by pressure cycling. Low hydrogen permeability is typically achieved at the expense of gravimetric efficiency.

Published US patent application US 2018/0066797 A1 discloses a storage tank for storing gaseous hydrogen, the tank having a liner, which may be of resin material, serving as an inner layer and a fibre-reinforced polymer matrix composite structure surrounding the outer surface of the liner, the composite structure having a plurality of carbon fibres layers and two outermost layers of glass fibre.

### BRIEF SUMMARY

The present invention provides a storage tank for storing gaseous hydrogen, the storage tank comprising a boundary wall having a laminate composite structure which includes a resin-rich layer forming an internal surface of the boundary wall, a glass-fibre composite layer in contact with the resin-rich layer, a first carbon fibre composite layer in contact with the glass-fibre composite layer on a side thereof remote from the resin-rich layer and a second carbon fibre composite layer in contact with the first composite carbon fibre layer on a side thereof remote from the glass fibre composite layer, characterised in that the ply thickness of the second carbon fibre composite layer is greater than the ply thickness of the first carbon fibre composite layer and the thickness of the second carbon fibre composite layer is greater than the thickness of the first carbon fibre composite layer. The resin-rich layer provides a high degree of impermeability to gaseous hydrogen. The glass fibre composite layer is more resistant to micro-cracking than an equivalent thickness of carbon fibre composite since fibres within the layer have a strain behaviour which is closer to that of the surrounding matrix than is the case for carbon fibre composite material. The first carbon fibre composite layer provides the resin-rich and glass fibre composite layers with stiffness and support. The first carbon fibre composite layer provides substantial resistance to micro-cracking. The second carbon fibre composite layer provides lower resistance to micro-cracking, but is less susceptible to such cracking because it is disposed on side of the first carbon fibre composite layer remote from the glass fibre composite layer which (together with the resin rich layer) is intended to contain pressurised hydrogen gas; the second carbon fibre composite layer can be laid down faster than the first, allowing faster and hence more cost effective fabrication of the overall structure.

The laminate composite structure may further comprise a protective layer in contact with the second carbon fibre composite layer on a side thereof remote from the first carbon fibre layer. The protective layer may be a layer of elastomeric material or a layer of a glass fibre composite material system.

The storage tank may comprise a toughening material encapsulated within one or more layers of the laminate composite structure and/or a membrane material within one or more layers of the laminate composite structure.

### BRIEF DESCRIPTION OF THE DRAWINGS

Embodiments of the invention are described below by way of example only and with reference to the accompanying drawings in which:
- Figure 1: shows a longitudinal section of a storage tank of the invention for storing gaseous hydrogen; and
- Figure 2: shows the structure of a portion of the boundary wall of the Figure 1 tank.

### DETAILED DESCRIPTION

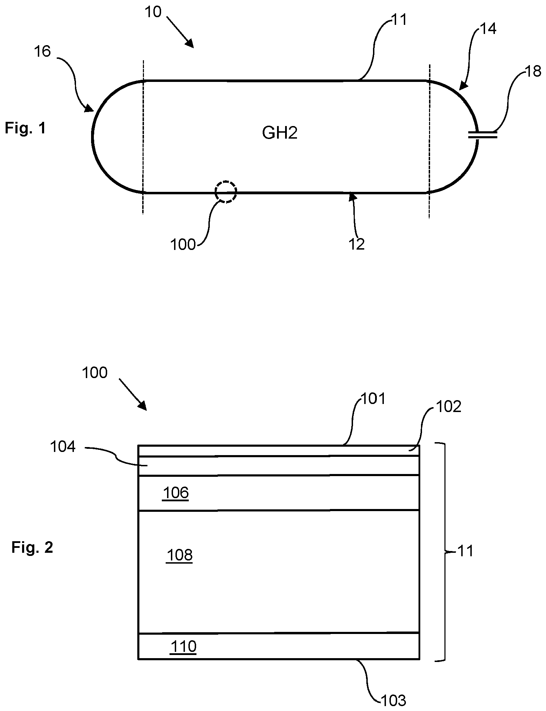

Figure 1 shows a tank 10 for storage of gaseous hydrogen at high pressure, for example 300 bar or more. The tank 10 comprises a cylindrical central section 12 and two hemispherical end portions 14, 16 formed by a boundary wall 11. A metal fitting 18 passing through the boundary wall 11 at hemispherical end portion 14 allows filling and emptying of the tank 10.

Figure 2 shows the structure of a portion 100 of the boundary wall 11 of the tank 10 of Figure 1, the structure of the boundary wall 11 being substantially the same at all positions around the wall 11. The boundary wall 11 has a laminate composite structure and has inner and outer surfaces 101, 103 respectively. The inner most layer 102 of the boundary wall is a resin-rich layer which provides a high-quality layer which remains substantially free of void and cracks under pressure and temperature cycling and which therefore provides a layer of low permeability for hydrogen stored within the tank 10. The resin-rich layer 102 provides the internal surface 101 of the boundary wall 11 and is supported on a glass-fibre composite layer 104. Glass fibres within layer 104 have a strain behaviour that is closer to the performance of the matrix surrounding the glass fibres than is the case for carbon fibres within carbon fibre composite material, so that incidence of fibre/matrix failure due to micro-cracking is lower for the layer 104 than would be the case for a carbon-fibre composite layer when the tank 10 is subjected to pressure cycling. Glass-fibre composite layer 104 therefore provides a higher degree of resistance to hydrogen leakage than would be the case for a carbon-fibre composite layer.

Layers 106, 108 are carbon-fibre composite layers of relatively lower and higher ply thickness respectively. Layer 106 is thinner than layer 108. A low ply thickness layer gives a superior structural performance compared to a layer of high ply thickness but is more time-consuming to lay down. Layer 108 provides support for layers 106, 104, 102 and provides the boundary wall 11 with suitable stiffness and resistance to pressure loading when the tank 10 is filled with gaseous hydrogen. Layer 108 has a relatively high ply thickness compared to layer 106 and can therefore be laid down at a faster rate and with lower cost compared to layer 106. Layers 106, 108 can therefore be optimised to provide a required performance in terms of cost, speed of manufacture and hydrogen permeability performance.

Layer 110, which provides the external surface 103 of the boundary wall, is an outer protective layer which may be a layer of elastomeric material or a layer of a glass-fibre composite material system.

Toughening materials, such as nano-clay, may optionally be encapsulated within one or more of the layers 102, 104, 106, 108, 110 to allow a reduction in the thickness of those layers and hence a reduction in the weight of tank 10.

Membrane materials may be dispersed through the layers of boundary wall 11 to reduce or prevent permeation of hydrogen gas from the inner surface 101 to the outer surface 103 of the boundary wall 11 of the tank 10.

The laminate boundary wall 11 provides micro-cracking resistance and hydrogen impermeability functionality towards the inner boundary 101 (layers 102,104, 106) and more structural, cheaper and faster deposition forms towards the outer boundary 103 (layers 108, 110). The tank 10 therefore has the required resistance to pressure cycling and hydrogen impermeability without having excessive weight and is therefore suitable for civil aviation applications.

## Claims

1. A storage tank (10) for storing gaseous hydrogen, the gas storage tank comprising a boundary wall having a laminate composite structure (100) which includes a resin-rich layer (102) forming an internal surface (101) of the boundary wall, a glass-fibre composite layer (104) in contact with the resin-rich layer, a first carbon fibre composite layer (106) in contact with the glass-fibre composite layer on a side thereof remote from the resin-rich layer and a second carbon fibre composite layer (108) in contact with the first carbon fibre composite layer on a side thereof remote from the glass fibre composite layer, **characterised in that** the ply thickness of the second carbon fibre composite layer is greater than the ply thickness of the first carbon fibre composite layer and the thickness of the second carbon fibre composite layer is greater than the thickness of the first carbon fibre composite layer.

2. A storage tank according to claim 1 further wherein the laminate composite structure comprises a protective layer (110) in contact with the second carbon fibre composite layer on a side thereof remote from the first carbon fibre composite layer.

3. A storage tank according to claim 2 wherein the protective layer is either a layer of elastomeric material or a layer of a glass fibre composite material system.

4. A storage tank according to any preceding claim further comprising a toughening material encapsulated within one or more layers of the laminate composite structure.

5. A storage tank according to any preceding claim further comprising a membrane material within one or more layers of the laminate composite structure.

## Patentansprüche

1. Lagerbehälter (10) zum Lagern von gasförmigem Wasserstoff, wobei der Gaslagerbehälter eine Grenzwand umfasst, die eine Laminatverbundstruktur (100) aufweist, die eine harzreiche Schicht (102), die eine innere Oberfläche (101) der Grenzwand bildet, eine Glasfaserverbundschicht (104) in Kontakt mit der harzreichen Schicht, eine erste Kohlefaserverbundschicht (106) in Kontakt mit der Glasfaserverbundschicht auf einer von der harzreichen Schicht entfernten Seite davon und eine zweite Kohlefaserverbundschicht (108) in Kontakt mit der ersten Kohlefaserverbundschicht auf einer von der Glasfaserverbundschicht entfernten Seite davon einschließt, **dadurch gekennzeichnet, dass** die Lagendicke der zweiten Kohlefaserverbundschicht größer als die Lagendicke der ersten Kohlefaserverbundschicht ist und die Dicke der zweiten Kohlefaserverbundschicht größer als die Dicke der ersten Kohlefaserverbundschicht ist.

2. Lagerbehälter nach Anspruch 1, wobei die Laminatverbundstruktur ferner eine Schutzschicht (110) in Kontakt mit der zweiten Kohlefaserverbundschicht auf einer von der ersten Kohlefaserverbundschicht entfernten Seite davon umfasst.

3. Lagerbehälter nach Anspruch 2, wobei die Schutzschicht entweder eine Schicht aus elastomerem Material oder eine Schicht aus einem Glasfaserverbundmaterialsystem ist.

4. Lagerbehälter nach einem vorhergehenden Anspruch, ferner umfassend ein verzähendes Material, das innerhalb einer oder mehrerer Schichten der Laminatverbundstruktur eingekapselt ist.

5. Lagerbehälter nach einem vorhergehenden Anspruch, ferner umfassend ein Membranmaterial innerhalb einer oder mehrerer Schichten der Laminatverbundstruktur.

## Revendications

1. Réservoir de stockage (10) pour stocker de l'hydrogène gazeux, le réservoir de stockage de gaz comprenant une paroi limite comportant une structure composite stratifiée (100) qui inclut une couche riche en résine (102) formant une surface interne (101) de la paroi limite, une couche composite de fibres de verre (104) en contact avec la couche riche en résine, une première couche composite de fibres de carbone (106) en contact avec la couche composite de fibres de verre sur une face de celle-ci éloignée de la couche riche en résine et une seconde couche composite de fibres de carbone (108) en contact avec la première couche composite de fibres de carbone sur une face de celle-ci éloignée de la couche composite de fibres de verre,
**caractérisé en ce que** l'épaisseur de pli de la seconde couche composite de fibres de carbone est supérieure à l'épaisseur de pli de la premier couche composite de fibres de carbone et l'épaisseur de la seconde couche composite de fibres de carbone est supérieure à l'épaisseur de la première couche composite de fibres de carbone.

2. Réservoir de stockage selon la revendication 1, dans lequel en outre la structure composite stratifiée comprend une couche protectrice (110) en contact avec la seconde couche composite de fibres de carbone sur une face de celle-ci éloignée de la première couche composite de fibres de carbone.

3. Réservoir de stockage selon la revendication 2, dans lequel la couche protectrice est soit une couche de matériau élastomère, soit une couche d'un système de matériau composite de fibres de verre.

4. Réservoir de stockage selon l'une quelconque des revendications précédentes, comprenant en outre un matériau de renforcement encapsulé dans une ou plusieurs couches de la structure composite stratifiée.

5. Réservoir de stockage selon l'une quelconque des revendications précédentes, comprenant en outre un matériau de membrane à l'intérieur d'une ou plusieurs couches de la structure composite stratifiée.
